# EUROPÄISCHE PATENTANMELDUNG

(11) **EP 0 547 405 A2**
(43) Veröffentlichungstag der Anmeldung: **23.06.1993**
(21) Anmeldenummer: 92119935.2
(22) Anmeldetag: 24.11.1992
(51) Int. Cl.: F16C 33/74, F16C 11/04, F16J 15/50

(54) **Abgedichtetes Schwenklager**

(30) Priorität: 19.12.1991 DE 4142030
(71) Anmelder: Jörn GmbH, D-70736 Fellbach (DE); MAN Nutzfahrzeuge AG, 80976 München (DE)
(72) Erfinder: Zawadzki, Bernd Dipl.-Ing, W-7054 Korb (DE); Stummer, Josef Dipl.-Ing., W-8000 München 45 (DE); Übelacker, Andreas Dipl.-Ing., W-8061 Röhrmoos (DE)
(74) Vertreter: Neubauer, Hans-Jürgen, Dipl.-Phys.

(57) **Zusammenfassung**

Die Erfindung betrifft eine Abdichtung des Lagerinnenraums eines Schwenklagers durch beidseitige Dichtringe (6). Diese bestehen jeweils aus einem im Lagerlängsschnitt L-förmigen Innenring (7) und einem Außenring (8), wobei zwischen Ringscheiben (9 und 11) ein Gummiring (13) einvulkanisiert ist. Der Innenring (7) und der Außenring (8) sind jeweils durch einen Preßsitz mit den zugeordneten Lagerteilen (2, 3) dicht und verdrehfest verbunden, wobei eine axiale Druckvorspannung im Gummiring (13) aufbringbar ist. Damit wird ein dicht abgeschlossener Lagerinnenraum erreicht. Relativbewegungen der Lagerteile (2, 3) werden molekular im Gummiring (13) aufgenommen. Durch konstruktive Auslegung ist eine definierte, hohe axiale Druckvorspannung im Gummiring einstellbar.

## Beschreibung

Die Erfindung betrifft eine Abdichtung des Innenraums eines Schwenklagers nach dem Oberbegriff des Anspruchs 1.

Ein bekanntes Schwenklager als Blattfedermittenlagerung an einem Doppelachsaggregat eines Nutzfahrzeugs (DE 39 37 301 Al) besteht aus einem einstückigen, äußeren Lagerteil und einem zweistückigen, inneren Lagerteil. Das innere Lagerteil ist an einer mittleren Radialebene geteilt, wobei das äußere Lagerteil und die beiden inneren Lagerteilhälften über deren Stoßstelle angepaßt sind. Das Außenteil weist eine Kammer als Lagerinnenraum für Schmierstoffe auf.

An beiden Lagerseiten sind zur Lagerabdichtung und zur Verhinderung eines Schmierstoffaustritts Dichtringe in der Art von sogenannten Simmerringen angebracht. Diese Simmerringe sind Gleitringdichtungen, die mit einer federbelasteten Dichtlippe am inneren Lagerteil anliegen und bei Schwenkbewegungen auf diesem gleiten.

Solche Simmerringabdichtungen haben bei Schwenklagern die, wie im vorliegenden Fall, bei einer Doppelachsaggregatlagerung starken Umweltbelastungen ausgesetzt sind, den Nachteil, daß sie an den Dichtlippen unterrosten können. Es tritt dann Staub ein, wodurch bei der Bewegung ein Schmirgeleffekt entsteht, der schnell zu Undichtigkeiten und einem Schmiermittelaustritt und damit zum Ausfall des Lagers führt. Dieser Vorgang tritt besonders bei relativ kleinen Schwenkbewegungen auf, wie sie bei einer Doppelachsaggregatlagerung vorliegen. Bei großen Schwenkbewegungen oder Drehbewegungen ist dagegen die Gefahr für den vorstehend beschriebenen Ausfall einer Simmerringdichtung weniger groß, da sich die Dichtflächen dann betriebsmäßig blank schleifen.

Weiter wurden bei der bekannten Abdichtung Druckunterschiede zwischen dem Lagerinnenraum und der Umgebung festgestellt, die durch Lagererwärmung bei Belastung oder durch Pumpeffekte der Dichtlippen an den Simmerringen entstehen können. Dadurch kann Schmiermittel nach außen gepreßt werden, so daß durch Schmiermittelverlust das Lager im Laufe der Zeit ausfällt.

Weiter ist eine Abdichtung des Lagerinnenraums eines Schwenklagers durch zwei Dichtringe bekannt, wobei die Dichtringe jeweils aus einem mit dem inneren Lagerteil dicht und verdrehsicher verbundenen Innenring und einem mit dem äußeren Lagerteil dicht und verdrehsicher verbundenen Außenring bestehen. Der Innen- und Außenring sind jeweils als koaxiale und radial gegenüberliegende Rohrstücke aus festem Werkstoff ausgebildet. Zwischen Innenring und Außenring ist eine in einer Radialebene stehende Gummiwand einvulkanisiert. Da der Innenring und der Außenring jeweils verdrehfest und dicht mit den beiden gegeneinander verschwenkbaren Lagerteilen verbunden sind, wird die Bewegungen in der abdichtenden Gummiwand molekular ohne Gleitbewegungen aufgenommen.

Weiter ist in einer Ausführungsform dieses Standes der Technik eine Ringanordnung vorgesehen, bei der im Herstellzustand die Gummiwand im Querschnitt eine hohlkegelige Form aufweist.

Bei der Montage werden der Innenring und Außenring relativ zueinander in Axialrichtung verschoben, wodurch in der Gummiwand eine Vorspannung aufgebaut wird. Eine solche Vorspannung soll schädliche Zugspannungen im Gummi vermeiden und damit die Lebensdauer erhöhen.

Bei dieser bekannten Art zur Aufbringung der Gummivorspannung wird lediglich die Gummiwand in sich gebogen und insbesondere nicht direkt gegen Abstützwände eingespannt. Dadurch ist die Einstellung einer definierten Gummivorspannung nur mit geringer Genauigkeit möglich, wobei auch die Gefahr besteht, daß die vorgespannte Gummiwand ausknickt und ausbeult. Da die Gummiwand in einer Radialebene steht und zur molekularen Aufnahme der Schwenkbewegungen eine relativ große radiale Erstreckung haben muß, sind die Verdrehwinkel im Gummi zur Lagerachse hin erheblich geringer als im radial äußeren Gummibereich, so daß dadurch ungünstige Belastungsunterschiede im Gummimaterial auftreten können.

Aufgabe der Erfindung ist es demgegenüber, eine gattungsgemäße Abdichtung so weiterzubilden, daß bei guter Montage eine definierte Gummivorspannung mit einfachen Maßnahmen aufbringbar ist.

Diese Aufgabe wird mit den kennzeichnenden Merkmalen des Anspruchs 1 gelöst.

Gemäß Anspruch 1 ist der Innenring im Lagerlängsschnitt L-förmig ausgeführt, das heißt, der Innenring besteht aus einer in einer Radialebene und axial zur Lageraußenseite hin liegenden Innenring-Ringscheibe und einem damit verbundenen, koaxial liegenden Innenring-Rohrstück. Der Außenring besteht aus einer der Innenring-Ringscheibe zur axialen Lagermitte hin gegenüberliegenden Außenring-Ringscheibe. Zwischen der Innenring-Ringscheibe und der Außenring-Ringscheibe ist ein Gummiteil als Gummiring einvulkanisiert, der somit in axialer Richtung beidseitig abgestützt ist.

Sowohl der Innenring als auch der Außenring sind durch einen Preßsitz mit den jeweils zugeordneten Lagerteilen verbunden. Durch axiales Zusammenfügen der Lagerteile wird der Gummiring zwischen der Innenring-Ringscheibe und Außenring-Ringscheibe eingespannt, wodurch eine axiale Druckvorspannung erhalten wird.

Durch diese Art der axialen Vorspannung wird der Gummiring unmittelbar zwischen Abstützflächen eingespannt, so daß eine hohe und je nach Vorspannungsweg genau definierte Vorspannung aufgebracht werden kann.

Der Lagerinnenraum und das Schmiermittelvolumen sind dabei ohne Gleitflächen abgedichtet, wobei Relativbewegungen molekular im Gummiring aufgenommen werden. Damit ist eine Lebensdauerschmierung für die Lagerung möglich, wie sie mit einer Simmerringabdichtung nicht erreichbar ist. Druckdifferenzen, insbesondere ein Druckanstieg durch Erwärmung, können über die Gummiteile aufgenommen werden. Da der Lagerinnenraum durch die Dichtringe hermetisch abgeschlossen ist, können auch keine Pumpeffekte, wie bei Simmerringen, auftreten.

Nach Anspruch 2 wird das Innenring-Rohrstück mit seiner radial nach innen weisenden Fläche auf eine entsprechende Sitzfläche am ersten, inneren Lagerteil zur Herstellung des Preßsitzes dicht und ortsfest aufgepreßt. Damit stehen für den Preßsitz und eine dichte, verdrehfeste Halterung eine ausreichend große Anpreßfläche zur Verfügung.

Nach Anspruch 3 ist das Innenring-Rohrstück so lange dimensioniert, daß es über den Bereich der Außenring-Ringscheibe zur Lagermitte hin vorsteht und dort mit einem stirnseitigen Rand (bei der Montage) an einem Anschlag am radial äußeren Lagerteil abgestützt ist. Damit wird erreicht, daß beim axialen Zusammenfügen des (insbesondere geteilten) inneren Lagerteils und bei der Herstellung des Preßsitzes am Innenring-Rohrstück dieses gegen die Aufpreßrichtung am äußeren Lagerteil abgestützt ist. Dabei ergibt die relative Lage des Außenrings zum Innenring nach der Montage die vorbestimmte Vorspannung im Gummiring.

In einer bevorzugten Ausführungsform nach Anspruch 4 ist auch der Außenring im Lagerlängsschnitt L-förmig ausgeführt, das heißt, daß mit der Außenring-Ringscheibe ein koaxial zum Innenringrohrstück liegendes Außenring-Rohrstück verbunden ist. Dieses ist (nach der Montage) mit seiner radial nach außen weisenden Fläche in eine entsprechende Sitzfläche am zweiten äußeren Lagerteil zur Herstellung des Preßsitzes aufgepreßt. Damit wird auch hier für eine hohe Dichtheit und eine verdrehfeste Halterung eine große Anpreßfläche zur Verfügung gestellt.

Der Gummiring wird in einer üblichen Ausführungsform im Querschnitt rechteckig ausgebildet. Nach Anspruch 5 können jedoch spezielle Gegebenheiten in einer davon abweichenden Querschnittskontur des Gummirings berücksichtigt werden. Insbesondere kann die Kontur so angepaßt werden, daß im Betrieb im Gummimaterial gleiche Belastungen auftreten. Die Querschnittsform ist dabei bevorzugt im mittleren Bereich schmäler als an den Vulkanisierflächen auszuführen. Bei speziellen Anwendungsfällen können auch definierte Rückstellkräfte in den Gummiringen mit entsprechend den Anforderungen angepaßten Querschnittskonturen realisiert werden.

Für eine zusätzlich vergrößerte Sicherheit bei der Abdichtung und zu einer Haftungsverbesserung sind Maßnahmen mit den Ansprüchen 6 und 7 derart vorgeschlagen, daß an den Preßsitzflächen Gummidichtringe angebracht, die Flächen aufgerauht oder mit dünnen Gummischichten versehen sind.

Eine weitere Verbesserung in diesem Sinne wird erreicht, wenn gemäß Anspruch 8 eine Gummischicht auf einer Preßsitzfläche im Herstellzustand an ihrem Außenumfang eine Struktur durch Erhebungen und Vertiefungen aufweist. Im vorgespannten Einbauzustand wird bei entsprechender Dimensionierung die Struktur zu einer Gummischicht gleicher Schichtdicke zusammengepreßt.

Eine umlaufende Dichtlippe kann sich stirnseitig für eine verbesserte Schlitzabdichtung anlegen.

Eine besonders bevorzugte Strukturausbildung ergibt sich mit den Merkmalen des Anspruchs 9 durch umlaufende, nebeneinanderliegende Nuten. Bei extrem tiefen Betriebstemperaturen und dadurch verhärtetem Gummi wird hier bei starker Belastung zum Schutz der Abdichtung gegen Bruch ein Durchrutschen ermöglicht.

Mit den Merkmalen des Anspruchs 10 ist eine bevorzugte, konkrete Schwenklagerausführung beansprucht, insbesondere eine Blattfedermittenlagerung an einem Doppelachsaggregat eines Nutzfahrzeugs.

Anhand einer Zeichnung werden Ausführungsbeispiele der Erfindung mit weiteren Einzelheiten, Merkmalen und Vorteilen näher erläutert.

Es zeigen
- Fig. 1: einen axialen Längsschnitt durch eine Lagerhälfte mit einem Dichtring,
- Fig. 2: einen vergrößerten Schnitt durch eine Seite eines Dichtrings entsprechend Fig. 1 und
- Fig. 3: einen Schnitt entsprechend Fig. 2 einer anderen Ausführungsform eines Dichtrings.

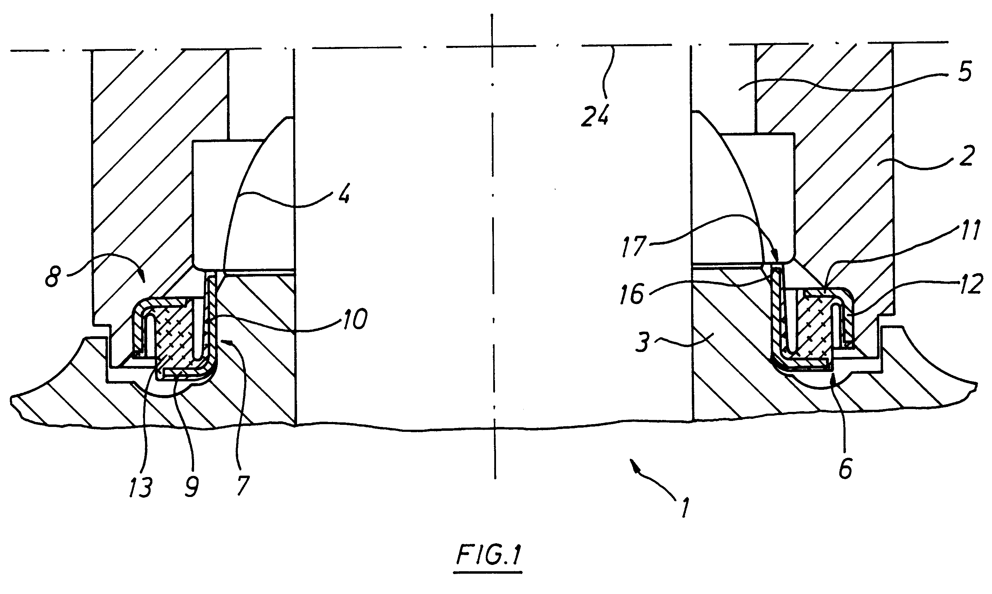

In Fig. 1 ist eine Hälfte eines (in einer mittleren Radialebene 24 geteilten) Schwenklagers 1 dargestellt, wie es insbesondere für eine Blattfedermittenlagerung an einem Doppelachsaggregat eines Nutzfahrzeugs verwendbar ist. Dieses Schwenklager 1 besteht aus einem einstückigen äußeren Lagerteil 2, das als rohrförmiges Gehäuse ausgebildet ist und einem zweistückigen inneren Lagerteil 3. Das innere Lagerteil 3 ist an einer mittleren Radialebene 24 geteilt, wo die beiden inneren Lagerteilhälften nach der Montage aneinanderliegen und zusammengespannt werden. Über diese Stoßstelle erfolgt die Einpassung der inneren Lagerteile 3 in das äußere Lagerteil 2 und damit die gegenseitige Justierung geschmierter Lagergleitflächen 4. Für diese Schmierung weist das äußere Lagerteil 2 eine umlaufende Kammer 5 zur Aufnahme von Schmierstoffen auf.

Die Kammer 5 bzw. der Lagerinnenraum sind mit Hilfe von zwei in Radialebenen an den Lagerseiten angeordneten Dichtringen 6 (in der Schwenklagerhälfte in Fig. 1 ist nur ein Dichtring dargestellt) abgedichtet.

Die Dichtringe 6 bestehen jeweils aus einem mit dem inneren Lagerteil 3 dicht und verdrehfest verbundenen, metallischen Innenring 7 und einem mit dem äußeren Lagerteil 2 dicht und verdrehfest verbundenen, metallischen Außenring 8.

Der Innenring 7 und der Außenring 8 sind im dargestellten Lagerlängsschnitt L-förmig ausgeführt, das heißt, der Innenring 7 besteht aus einer in einer Radialebene und axial zur Lageraußenseite hin liegenden Innenring-Ringscheibe 9 und einem damit verbundenen axial liegenden Innenring-Rohrstück 10. Entsprechend besteht der Außenring 8 aus einer in einer Radialebene und der Innenring-Ringscheibe gegenüberliegenden Außenring-Ringscheibe 11 und einem koaxial zum Innenring-Rohrstück 10 liegenden Außenring-Rohrstück 12.

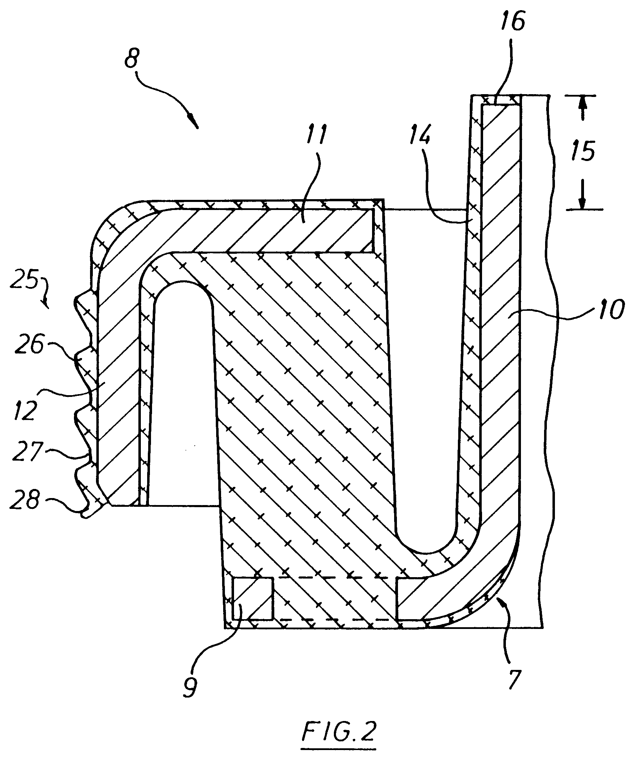

Zwischen der Innenring-Ringscheibe 9 und der Außenring-Ringscheibe 11 ist ein Gummiteil als Gummiring 13 einvulkanisiert. Der Gummiring 13 hat im Herstellzustand (sh. Fig. 2) eine im Querschnitt rechteckige und in Axialrichtung gestreckte Form. Der Gummi ist einerseits zur Verbesserung der Korrosionsbeständigkeit und andererseits aufgrund einer vereinfachten Herstellung mit dünnen Gummiauflagen 14 über die freien Metallflächen des Innenrings 7 und Außenrings 8 gezogen.

Das Innenring-Rohrstück 10 steht mit einem Überstand 15 über den Bereich der Außenring-Ringscheibe 11 zur Lagermitte hin vor.

Das Schwenklager 1 gemäß Fig. 1 wird folgendermaßen montiert: Die Dichtringe 6 werden beidseitig in stirnseitige Ringnuten am äußeren Lagerteil eingepreßt, wobei die äußere Umfangsfläche des Außenring-Rohrstücks 12 mit einer entsprechenden Gegenfläche am äußeren Lagerteil 2 einen dichten und verdrehfesten Preßsitz bildet. Zugleich wird die Außenring-Ringscheibe durch Anlagekontakt zur Lagermitte hin abgestützt. Der stirnseitige Rand 16 am Überstand 15 des Innenring-Rohrstücks 10 liegt nach dem Einpressen des Dichtrings 6 am äußeren Lagerteil 2 in geringem Abstand (Vorspannweg) gegenüber einem Anschlag 17 am äußeren Lagerteil 2.

Nach diesem ersten Montageschritt werden jeweils von der Lagerseite her die beiden Lagerteilhälften des inneren Lagerteils 3 eingeschoben, bis sie in der mittleren Radialebene aneinander liegen. Bei diesem Einsteckvorgang wird zugleich ein zylindrischer Bereich des inneren Lagerteils 3 in das Innenring-Rohrstück 10 eingeschoben. Dabei wird zuerst der Gummiring 13 so lange verformt und vorgespannt, bis der Rand 16 am Anschlag 17 anliegt. Dieser konstruktiv festlegbare Weg bestimmt somit die Gummivorspannung. Erst nachdem der Anschlag erreicht ist, wird der zylindrische Bereich des inneren Lagerteils 3 in das Innenring-Rohrstück 10 zur Herstellung eines Preßsitzes eingepreßt.

Durch die dargestellten Preßsitze wird eine dichte und verdrehfeste Verbindung des Dichtrings 6 mit dem inneren und äußeren Lagerteil erreicht, wobei der Gummiring 13 den Lagerinnenraum abschließt und Relativbewegungen zwischen den Lagerteilen molekular im Gummimaterial aufnimmt. Durch die in der axialen Montagerichtung liegenden Abstützflächen für den Gummiring 13 in Form der Innenring-Ringscheibe 9 und der Außenring-Ringscheibe 11 wird eine definierte, hohe Vorspannung erzielt.

In Fig. 2 ist eine alternative Gestaltung einer Gummiauflage als dünne Gummischicht 25 am Außenumfang von Preßsitzflächen beispielhaft am Außenring-Rohrstück 12 dargestellt. Entsprechend kann diese Gummischicht 25 auch am Außenumfang des Innenring-Rohrstücks 10 oder den stirnseitigen Anlageflächen der Innenring-Ringscheibe 9 oder Außenring-Ringscheibe 11 vorgesehen sein.

Die Gummischicht 25 hat eine Struktur im Herstellzustand in der Form von umlaufenden Erhebungen 26 und Vertiefungen als Nuten 27, die im Einbauzustand zu einer Gummischicht gleicher Schichtdicke zusammengepreßt wird.

Stirnseitig ist eine umlaufende Dichtlippe 28 vorgesehen, die sich zu einer Schlitzabdichtung stirnseitig an das äußere Lagerteil 2 anlegt.

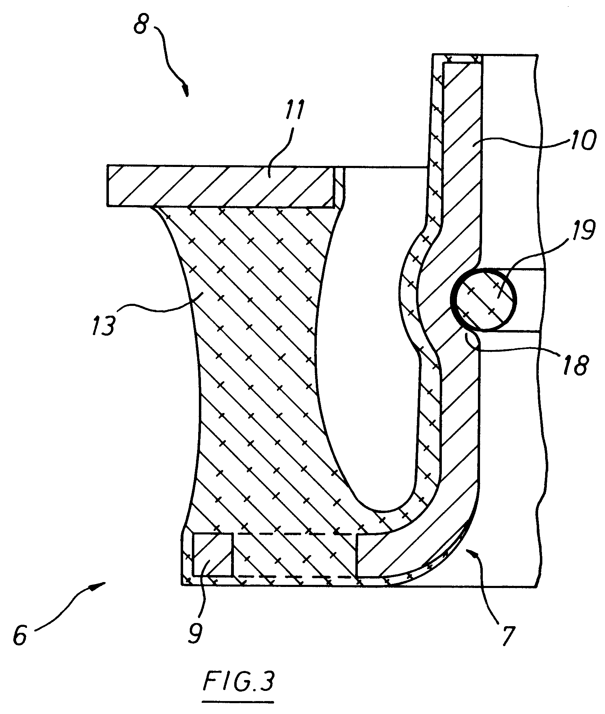

Im Schnitt der Fig. 3 ist eine weitere Auführungsform eines Dichtrings 6 dargestellt, deren Merkmale teilweise auch im Zusammenhang mit der ersten Ausführungsform zu verwenden sind.

Der Innenring 7 ist auch hier im Querschnitt L-förmig mit einer Innenring-Ringscheibe 9 und einem Innenring-Rohrstück 10 ausgeführt. Um ggfs. eine noch verbesserte Dichtheit am Preßsitz zu erreichen, ist an der Preßsitzfläche des Innenring-Rohrstücks 10 eine ringförmig umlaufende Vertiefung 18 eingeformt, in die ein Gummidichtring 19 einvulkanisiert oder eingelegt werden kann. Ähnlich kann auch die Preßsitzfläche am Außenring-Rohrstück 12 der Ausführungsform nach den Fig. 1 und 2 ausgebildet sein.

In der Ausführungsform nach Fig. 3 ist als Außenring 8 lediglich eine Außenring-Ringscheibe 11 vorgesehen, die in Einsatzfällen mit weniger großen Belastungen für eine feste und dichte Verbindung zum äußeren Lagerteil 2 ausreichend sein kann.

Der Gummiring 13 hat hier im Herstellzustand eine von der rechteckigen Querschnittsform abweichende Kontur, wobei der mittlere Bereich schmäler als die Breite der Vulkanisierflächen ausgeführt ist. Je nach den Gegebenheiten kann eine solche Querschnittskontur, insbesondere zur Vergleichmäßigung der Belastung im Gummimaterial, vorteilhaft sein.

Die Anordnung und Montage der Ausführungsform nach Fig. 3 erfolgt in der gleichen Weise wie im Zusammenhang mit der Ausführung nach Fig. 1 und Fig. 2 dargestellt.

## Patentansprüche

1. Abdichtung des Lagerinnenraums eines aus zwei gegeneinander verdrehbaren Lagerteilen bestehenden Schwenklagers durch zwei in Radialebenen an den Lagerseiten angeordnete Dichtringe,
die Dichtringe jeweils aus einem mit dem ersten, radial inneren Lagerteil dicht und verdrehfest verbundenen Innenring und einem mit dem zweiten, radial äußeren Lagerteil dicht und verdrehfest verbundenen Außenring bestehen,
der Innenring und Außenring aus einem festen Werkstoff, insbesondere Metall, ausgebildet sind und
zwischen Innenring und Außenring ein umlaufendes Gummiteil dicht einvulkanisiert ist, das im montierten Zustand unter Vorspannung steht,
dadurch gekennzeichnet,
daß der Innenring (7) im Lagerlängsschnitt L-förmig ausgeführt ist, das heißt aus einer in einer Radialebene und axial zur Lageraußenseite hin liegenden Innenring-Ringscheibe (9) und einem damit verbundenen, axial liegenden Innenring-Rohrstück (10) besteht,
daß der Außenring (8) aus einer der Innenring-Ringscheibe (9) zur axialen Lagermitte hin gegenüberliegenden Außenring-Ringscheibe (11) besteht,
daß das Gummiteil als Gummiring (13) zwischen der Innenring-Ringscheibe (9) und der Außenring-Ringscheibe (11) einvulkanisiert ist,
daß sowohl der Innenring (7) als auch der Außenring (8) durch einen Preßsitz mit den jeweils zugeordneten Lagerteilen (2, 3) verbunden sind und
daß durch axiales Zusammenfügen der Lagerteile (2, 3) eine axiale Druckvorspannung im Gummiring (13) zwischen dessen Abstützflächen an der Innenring-Ringscheibe (9) und Außenring-Ringscheibe (11) aufgebracht ist.

2. Abdichtung nach Anspruch 1, dadurch gekennzeichnet, daß das Innenring-Rohrstück (10) mit seiner radial nach innen weisenden Fläche auf eine entsprechende Sitzfläche am ersten inneren Lagerteil (3) zur Herstellung des Preßsitzes dicht und verdrehfest aufgepreßt ist.

3. Abdichtung nach Anspruch 2, dadurch gekennzeichnet, daß das Innenring-Rohrstück (10) so lang dimensioniert ist, daß es über den Bereich der Außenring-Ringscheibe (11) zur Lagermitte hin vorsteht und dort mit einem stirnseitigen Rand (16) an einem Anschlag (17) am radial äußeren Lagerteil (2) abgestützt ist, dergestalt, daß beim axialen Zusammenfügen des (geteilten) inneren Lagerteils (3) und Herstellung des Preßsitzes am Innenring-Rohrstück (10) dieses gegen die Aufpreßrichtung am äußeren Lagerteil (2) nach Überwindung eines Vorspannweges abgestützt ist, wobei die relative Lage des Außenrings (8) zum Innenring (7) nach der Montage die vorbestimmte Vorspannung im Gummiring (13) ergibt.

4. Abdichtung nach einem der Ansprüche 1 bis 3, dadurch gekennzeichnet, daß auch der Außenring (8) im Lagerlängsschnitt L-förmig ausgeführt und mit der Außenring-Ringscheibe (11) ein koaxial zum Innenring-Rohrstück (10) liegendes Außenring-Rohrstück (12) verbunden ist und dieses mit seiner radial nach außen weisenden Fläche in eine entsprechende Sitzfläche am zweiten äußeren Lagerteil (2) zur Herstellung des Preßsitzes dicht und verdrehfest aufgepreßt ist.

5. Abdichtung nach einem der Ansprüche 1 bis 4, dadurch gekennzeichnet, daß der Gummiring (13) in der Querschnittskontur so ausgeführt ist, daß im Betrieb im Gummimaterial etwa gleiche Belastungen auftreten, wobei die Querschnittsform bevorzugt im mittleren Bereich schmäler als die Breite der Vulkanisierflächen ist.

6. Abdichtung nach einem der Ansprüche 1 bis 5, dadurch gekennzeichnet, daß wenigstens an einer der Preßsitzflächen des Innenring-Rohrstücks (10) oder Außenring-Rohrstücks (12) eine ringförmig umlaufende Vertiefung (18) zur Aufnahme eines einvulkanisierten oder eingelegten Gummidichtrings (19) eingeformt ist.

7. Abdichtung nach einem der Ansprüche 1 bis 6, dadurch gekennzeichnet, daß Preßsitzflächen aufgerauht und/oder mit dünnen Gummischichten (25) versehen sind.

8. Abdichtung nach Anspruch 7, dadurch gekennzeichnet, daß eine Gummischicht (25) auf einer Preßsitzfläche im Herstellzustand an ihrem Außenumfang eine Struktur durch Erhebungen (26) und Vertiefungen (27) und/oder eine stirnseitige, umlaufende Dichtlippe (28) aufweist.

9. Abdichtung nach Anspruch 8, dadurch gekennzeichnet, daß die Struktur aus umlaufenden, nebeneinanderliegenden Nuten gebildet ist.

10. Abdichtung nach einem der Ansprüche 1 bis 7, dadurch gekennzeichnet, daß das Schwenklager (1) aus einem einstückigen, äußeren Lagerteil (2) und einem zweistückigen, inneren Lagerteil (3) besteht, wobei das innere Lagerteil (3) in einer mittleren Radialebene (4) geteilt ist und das äußere Lagerteil (2) und die beiden inneren Lagerteilhälften über deren Stoßstelle angepaßt sind und
daß das äußere Lagerteil (2) eine Kammer (5) für Schmierstoffe aufweist, wobei das Schwenklager (1) insbesondere eine Blattfedermittenlagerung an einem Doppelachsaggregat eines Nutzfahrzeuges ist.
